# EUROPEAN PATENT APPLICATION

(11) **EP 4 530 804 A1**
(43) Date of publication of application: **02.04.2025**
(21) Application number: 24197770.1
(22) Date of filing: 30.08.2024
(51) Int. Cl.: G06F 3/01, G06F 3/04815, G06T 19/00

(54) **IMMERSIVE SYSTEM WITH MIXED REALITY AND VIRTUAL REALITY MODES**

(30) Priority: 26.09.2023 US 202363585348 P; 19.08.2024 US 202418808681
(71) Applicant: Meta Platforms, Inc., Menlo Park, CA 94025 (US)
(72) Inventor: Tanner, Christopher Richard, Menlo Park (US); Wallen, Nicholas, Menlo Park (US)
(74) Representative: Murgitroyd & Company

(57) **Abstract**

Aspects of the present disclosure are directed to managing mixed reality and virtual reality operating modes using an artificial reality system. An artificial reality system can be capable of operating in a virtual reality mode, where the environment displayed to a user is computer generated, or mixed reality mode, where the environment displayed to a user represents the user's real-world environment but includes one or more virtual objects that are computer generated. Implementations of a mode manager can manage these operating modes of the artificial reality system, such as managing the operating mode an XR system boots into on startup, managing transitions between these operating modes, and managing the display of virtual objects that persist in both operating modes.

## Description

### TECHNICAL FIELD

The present disclosure is directed to managing mixed reality and virtual reality operating modes using an artificial reality system.

### BACKGROUND

Artificial reality (XR) devices are becoming more prevalent. As they become more popular, the applications implemented on such devices are becoming more sophisticated. Augmented reality (AR) or mixed reality (MR) applications can provide interactive three-dimensional (3D) experiences that combine the real-world environment with virtual objects. On the other hand, virtual reality (VR) applications can provide an entirely self-contained 3D computer environment. AR, MR, and VR experiences can be observed by a user through a head-mounted display (HMD), such as glasses or a headset.

### SUMMARY

According to a first aspect, there is provided a method for transitioning between virtual reality and mixed reality modes, the method comprising: detecting, at an XR system, a trigger condition for transitioning from a first artificial reality mode to a second artificial reality mode; altering one or more user displays to transition from the first artificial reality mode to the second artificial reality mode, wherein, one or more displayed virtual objects present in the first artificial reality mode are persisted in the second artificial reality mode; display of the one or more virtual objects is altered between the first artificial reality mode and the second artificial reality mode; and altering the display of the one or more virtual objects comprises one or more of: altering a scale of the one or more virtual objects form the user's perspective, altering a skin of the one or more virtual objects, altering a distance at which the one or more virtual objects appear to be displayed from the user's perspective, or any combination thereof.

The first artificial reality mode may comprise virtual reality mode and the second artificial reality mode may comprise mixed reality mode.

Altering the display of the one or more virtual objects may further comprise: determining that a distance of the one or more virtual objects from the user's perspective in a virtual reality environment displayed during the virtual reality mode is greater than a threshold; and altering, in response to the determining, the distance at which the one or more virtual objects appear to be displayed from the user's perspective in a mixed reality environment displayed during the mixed reality mode.

The method may further comprise: altering, in response to the determining, the scale at which the one more virtual objects appear to be displayed from the user's perspective in the mixed reality environment. The one or more virtual objects may appear to be displayed at a first scale from the user's perspective in the virtual reality environment. The one or more virtual objects may appear to be displayed at a second scale from the user's perspective in the mixed reality environment. The adjusting may enlarge the one or more virtual objects in the mixed reality environment from the user's perspective.

The first artificial reality mode may comprise mixed reality mode and the second artificial reality mode may comprise virtual reality mode.

Altering the display of the one or more virtual objects may further comprise altering the skin of the one or more virtual objects. The one or more virtual objects may comprise a three-dimensional structure, and altering the skin of the one or more virtual objects may comprise altering one or more textures applied to the three-dimensional structure when displaying the one or more virtual objects.

The one or more virtual objects may be displayed with a first skin in a mixed reality environment displayed during the mixed reality mode, and the one or more virtual objects may be displayed with a second skin in a virtual reality environment displayed during the virtual reality mode.

Display of the skin of the one or more virtual objects may be controlled by first software during the mixed reality mode. Display of the skin of the one or more virtual objects may be controlled by second software during the virtual reality mode. The first software may apply the first skin in the mixed reality environment. The second software may apply the second skin in the virtual reality environment.

The first software may comprise a system shell and the second software may comprise a third-party virtual reality application.

According to a second aspect, there is provided an artificial reality (XR) system for transitioning between virtual reality and mixed reality modes, the XR system comprising: one or more processors; and one or more memories storing instructions that, when executed by the one or more processors, cause the XR system to carry out the method of the first aspect.

According to a third aspect, there is provided a computer-readable storage medium storing instructions for transitioning between virtual reality and mixed reality modes, the instructions, when executed by a computing system, cause the computing system to carry out the method of the first aspect.

According to a fourth aspect, there is provided a computer program product comprising instructions which, when the program is executed by a computer, causes the computer to carry out the method of the first aspect.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a conceptual diagram illustrating an example usage space for an artificial reality system.
Figures 6A-6K are conceptual diagrams illustrating example transitions between different artificial reality modes.
Figure 7 is a conceptual diagram illustrating an example mixed reality environment with virtual objects.
Figure 8 is a conceptual diagram illustrating an example virtual reality environment with virtual objects.
Figure 9 is a flow diagram illustrating a process used in some implementations of the present technology for booting an artificial reality system in a mixed reality or virtual reality operating mode.
Figure 10 is a flow diagram illustrating a process used in some implementations of the present technology for persisting virtual objects while transitioning between virtual reality and mixed reality modes.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to managing mixed reality and virtual reality operating modes using an artificial reality system. An artificial reality system can be capable of operating in a virtual reality mode, where the environment displayed to a user is completely computer generated, or mixed reality mode, where the environment displayed to a user represents the user's real-world environment but includes one or more virtual objects that are computer generated. Implementations of a mode manager can manage these operating modes of the artificial reality system, such as managing the operating mode an XR system boots into on startup, managing transitions between these operating modes, and managing the display of virtual objects that persist in both operating modes.

In some implementations, the mode manager automatically boots into an operating mode. For example, the mode manager can detect the last mode that the artificial reality system was operated in (e.g., virtual reality mode or mixed reality mode) and boot into that same mode upon startup of the artificial reality system. When booting into virtual reality mode, the mode manager can check to ensure the user is located in a usage space prior to immersing the user in a virtual reality environment. A usage space (e.g., "guardian") can be a space in the user's real-world environment that is defined such that the user can safely use the artificial reality system within the space. In some implementations, a previous virtual reality environment can be restored when booting into virtual reality mode and/or a default virtual reality environment can be displayed. When booting into mixed reality mode, the mode manager can restore a state of a mixed reality environment (e.g., virtual object states, virtual tablet state, etc.).

The mode manager can manage transitions from mixed reality mode to virtual reality mode or from virtual reality mode to mixed reality mode. For example, transitions into virtual reality mode can include a check that the user is located within a boundary for a defined usage space. Transitions into mixed reality mode can cause the display of virtual objects, such as full virtual objects or virtual object indicators. Transitions can be caused by user actions (e.g., the user tapping the artificial reality system HMD), user movement (e.g., movement out of a defined usage space), and/or software triggers. The mode manager can also persist one or more virtual objects between modes. In some implementations, the mode manager can alter the display of these virtual objects depending on the operating mode. Altering the display of these virtual objects can include: altering the scale of the virtual objects; altering the skin of the virtual objects, and/or altering the distance from the perspective of the user at which the virtual objects appear to be displayed.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), mixed reality (MR), which can include augmented reality (AR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR," "Mixed Reality," or "MR" refers to systems where A) a user views images of the real world after they have passed through a computing system (e.g., a tablet with a camera on the back can capture images of the real world and then display the images on the screen on the opposite side of the tablet from the camera and the tablet can process and adjust or "augment" the images as they pass through the system, such as by adding virtual objects) or B) light entering a user's eye is partially generated by a computing system and partially composes light reflected off objects in the real world (e.g., a headset could be shaped as a pair of glasses with a pass-through display, which allows light from the real world to pass through a waveguide that simultaneously emits light from a projector in the MR headset, allowing the MR headset to present virtual objects intermixed with the real objects the user can see). "Artificial reality," "extra reality," or "XR," as used herein, refers to any of VR, AR, MR, or any combination or hybrid thereof.

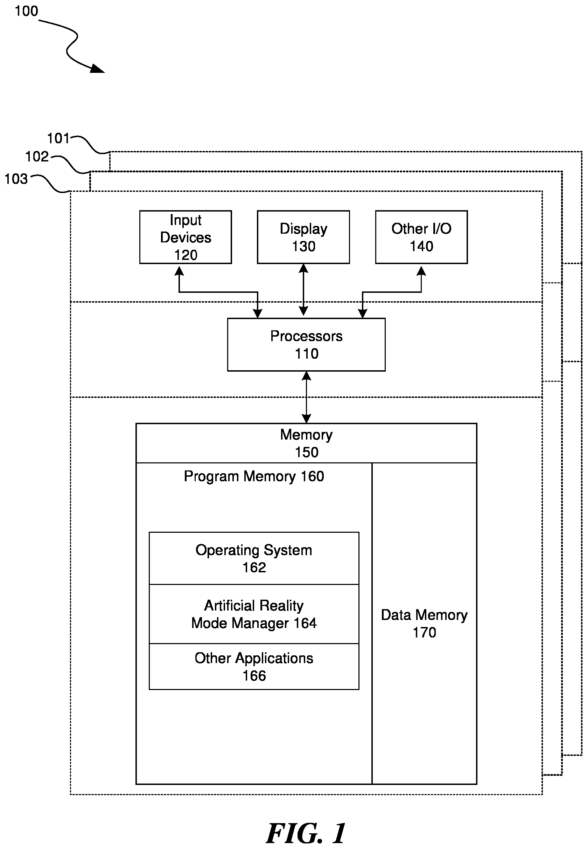

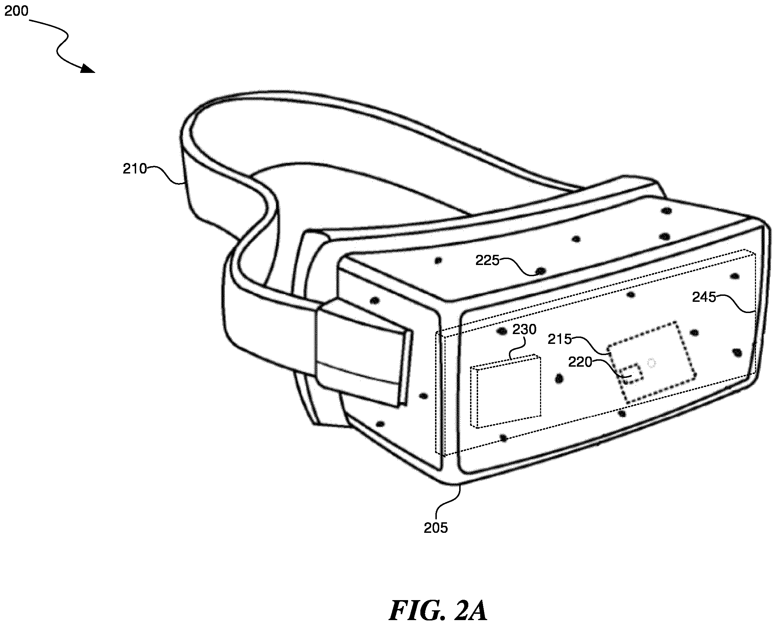

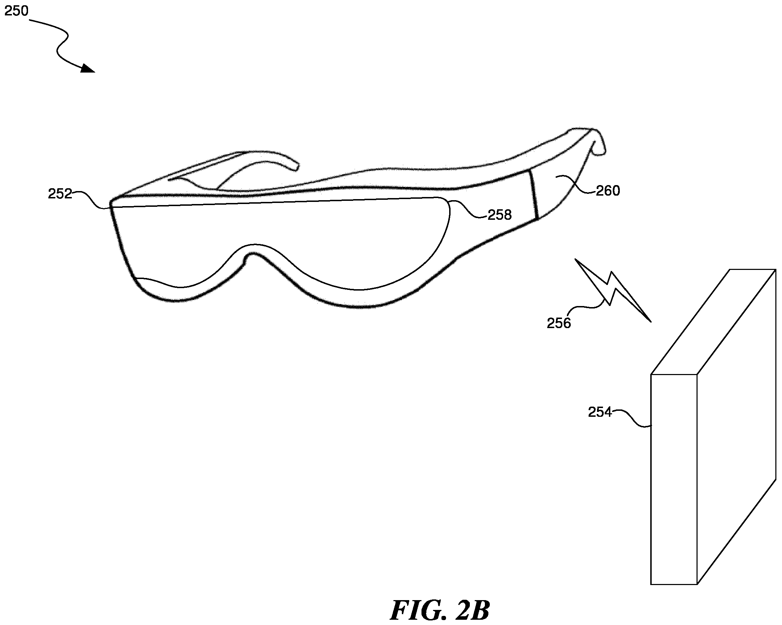

Several implementations are discussed below in more detail in reference to the figures. Figure 1 is a block diagram illustrating an overview of devices on which some implementations of the disclosed technology can operate. The devices can comprise hardware components of a computing system 100 that manage mixed reality and virtual reality operating modes using an artificial reality system. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, artificial reality mode manager 164, and other application programs 166. Memory 150 can also include data memory 170 that can include, e.g., sensor data, virtual object data (e.g., structure data, state data, etc.), application data, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in an artificial reality environment in three degrees of freedom (3DoF) or six degrees of freedom (6DoF). For example, the locators 225 can emit infrared light beams which create light points on real objects around the HMD 200. As another example, the IMU 215 can include e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

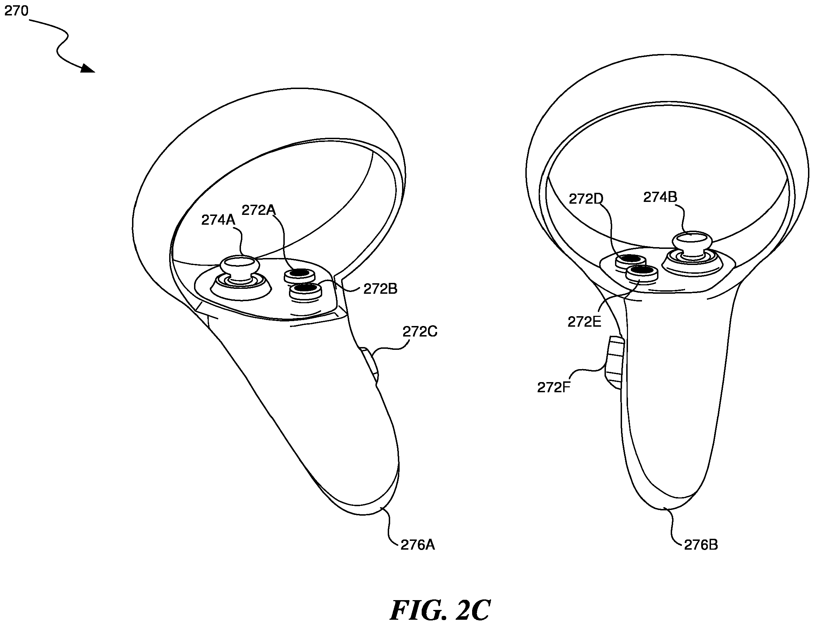

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

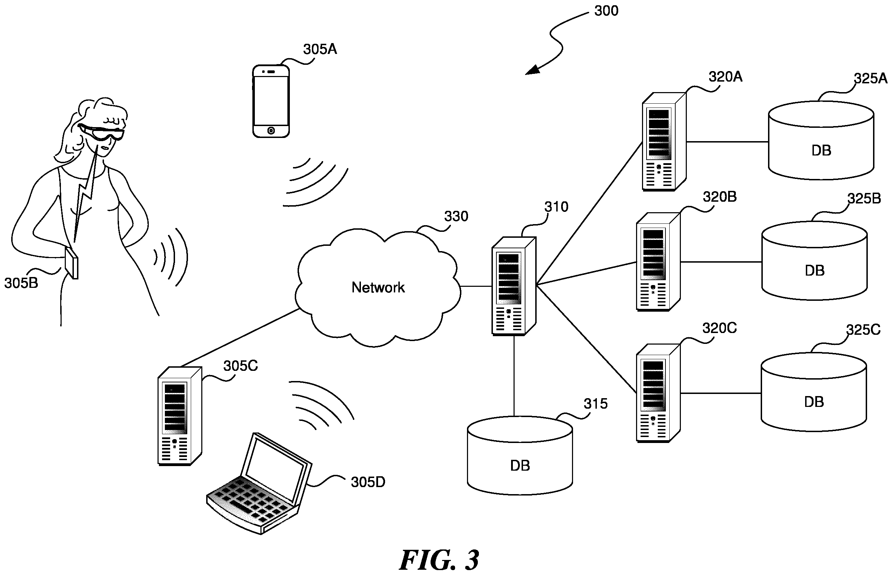

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

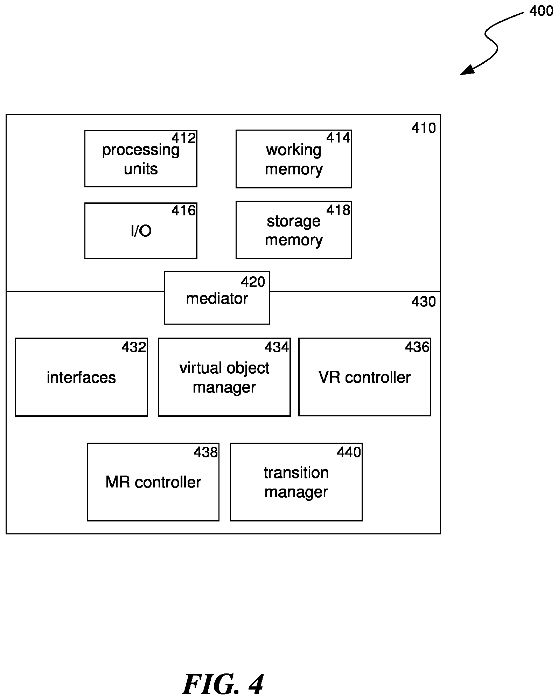

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for managing mixed reality and virtual reality operating modes using an artificial reality system. Specialized components 430 can include virtual object manager 434, VR controller 436, MR controller 438, transition manager 440, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

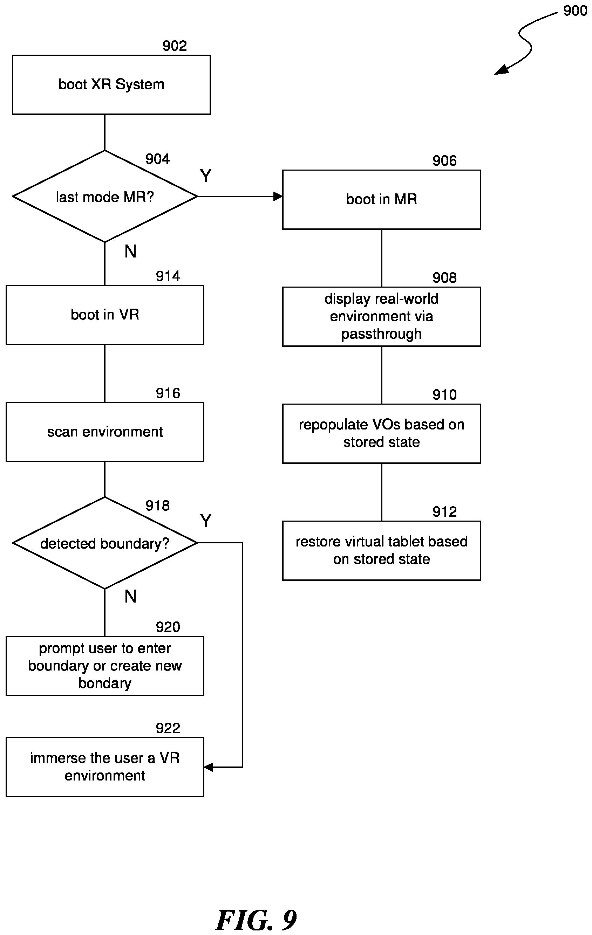

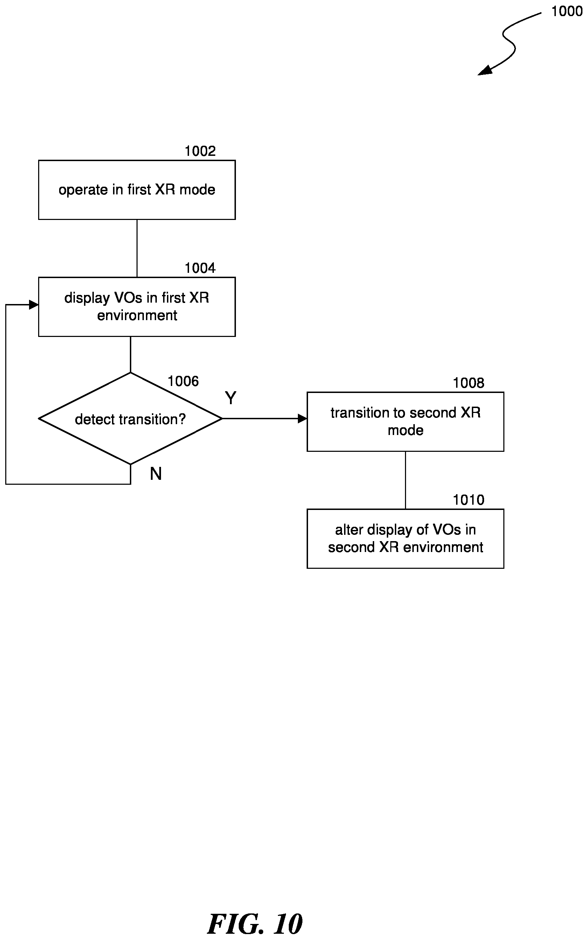

Virtual object manager 434 can manage virtual objects for the XR system. For example, virtual object manager 434 can cause display of virtual objects in a VR mode and/or an MR mode. In some implementations, virtual object manager 434 can manage display virtual objects to cause the display of full virtual objects (e.g., virtual objects that can respond to user interaction) and/or virtual object indicators (e.g., virtual objects with limited user interaction capabilities and/or that comprise a lower resolution display). For example, based on the operating mode and executing application, virtual object manager 434 can cause a given virtual object to be displayed as a full virtual object or as a virtual object indicator. In some implementations, virtual object manager 434 can cause one or more virtual objects to be persisted in both VR and MR modes. Virtual object manager 434 can also cause alteration of the display of these persisted virtual objects based on the operating mode. Further details regarding virtual object manager 434 are described with respect to block 910 of Figure 9 and blocks 1004 and 1010 of Figure 10.

VR controller 436 can cause the XR system to operate in VR mode. In some implementations, VR controller 436 can cause the XR system to boot into VR mode at startup. VR controller can detect whether the user is located in the boundary of a usage space and pause a VR environment displayed to the user in VR mode when the user is not located in a usage space or moves out of a usage space. VR controller 436 can interact with virtual object manager 434 to display virtual objects in a VR environment. Further details regarding VR controller 436 are described with respect to blocks 914, 916, 918, 920, and 922 of Figure 9 and blocks 1002, 1004, 1008, and 1010 of Figure 10.

MR controller 438 can cause the XR system to operate in MR mode. In some implementations, MR controller 438 can cause the XR system to boot into MR mode at startup. For example, MR controller 438 can repopulate virtual objects based on their last state and/or restore the state of a virtual tablet displayed in a MR environment. MR controller 438 can interact with virtual object manager 434 to display virtual objects in an MR environment. Further details regarding MR controller 438 are described with respect to blocks 906, 908, 901, and 912 of Figure 9 and blocks 1002, 1004, 1008, and 1010 of Figure 10.

Transition manager 440 can detect transition conditions and manage transitions between the MR and VR modes. For example, user action (e.g., tapping the XR system HMD, other suitable user actions) can comprise a detected transition condition. In another example, the user moving out of a usage space during VR mode can comprise a detected transition condition. In another example, a software trigger (e.g., virtual object user interaction, user selection of a mode via XR system native software, etc.) can comprise a detected transition condition. Transition manager 440 can communicate with VR controller 436 and MR controller 438 to implement transitions between VR and MR modes. Additional details on tapping a HMD to trigger an action are provided in U.S. Patent Application No. 18/068,048, Titled "Triggering Actions Based on Detected Motions on an Artificial Reality Device," filed on 12/19/2022, which is herein incorporated by reference in its entirety. Further details regarding transition manager 440 are described with respect to block 1006 of Figure 10.

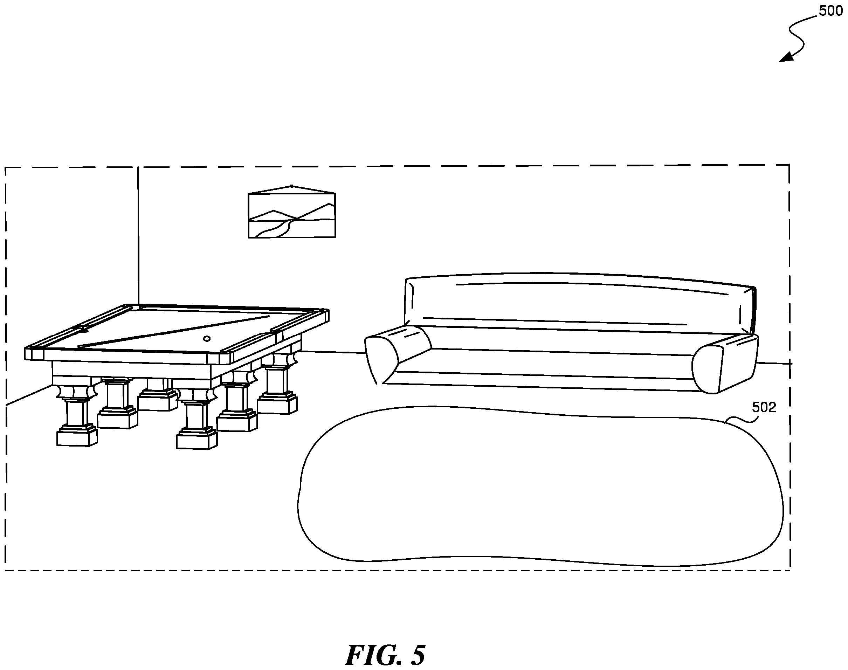

Some operating modes of the XR system, such as the VR operating mode, comprise a mechanism for ensuring the safety of the user. Figure 5 is a conceptual diagram illustrating an example usage space for an artificial reality system. Diagram 500 is a real-world environment that illustrates usage space 502. Usage space 502 (e.g., a guardian) can be a defined XR system usage space in the user's real-world environment. An XR system can detect that a user is located in the boundary of usage space 502 and immerse the user in a VR environment based on the detection. Usage space 502 may have a boundary which can trigger warnings or other system actions if a user crosses the boundary when in an XR experience (e.g., while the XR system operates in VR mode). In some implementations, an XR system can establish the boundaries of a usage space automatically by using depth sensors and/or imaging devices to identify the maximum boundaries of the real-world environment surrounding the XR system. Further details are described in U.S. Pat. App. No. 63/585,360, filed Sept. 26, 2023, entitled "AUTOMATIC GUARDIAN FOR AN ARTIFICIAL REALITY ENVIRONMENT," which is herein incorporated by reference in its entirety. In other examples, a user can define boundaries of the usage space via performing a workflow with the XR system (e.g., traversing the space while donning the HMD and/or moving XR system controllers).

In some implementations, a usage space can comprise dynamic boundaries and a trigger condition that causes a transition of operating modes can be detected relative to such a dynamic boundary. Further details regarding an XR system usage space comprising a dynamic boundary are described in U.S. Provisional Application No. 63/585,450, filed September 26, 2023, titled "Selective Guardians for an Application Executing in an Artificial Reality Environment," which is herein incorporated by reference in its entirety.

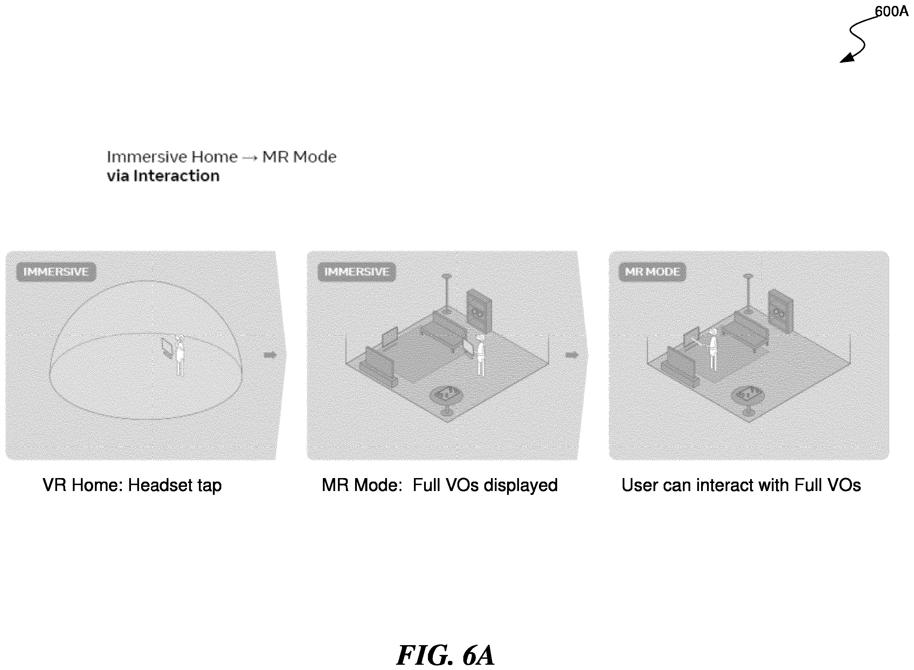

Implementations manage transitions between VR mode(s) and MR mode(s) for an XR system. Figures 6A-6K are conceptual diagrams illustrating example transitions between different artificial reality modes. Diagram 600A of Figure 6A illustrates a workflow for transitioning from VR mode to MR mode via a user action. In the illustrated example, the user is initially immersed in a VR environment via a VR home application (e.g., native VR application for the XR system). The user can take an action that triggers transition from VR mode to MR mode, such as double tapping the HMD of the XR system or via performing any other suitable action. Responsive to the user action, the XR system can transition from the VR home application (or any other suitable VR application) to MR mode, where one or more full virtual objects can be displayed to the user in a MR environment. In some implementations, a full virtual object can be an object that comprises structure (e.g., a three-dimensional structure) and that can receive interaction (e.g., sensed motion or other user input that interacts with the virtual object within the context of the XR environment) from the user. For example, a full virtual object can perform functionality in response to such user interactions.

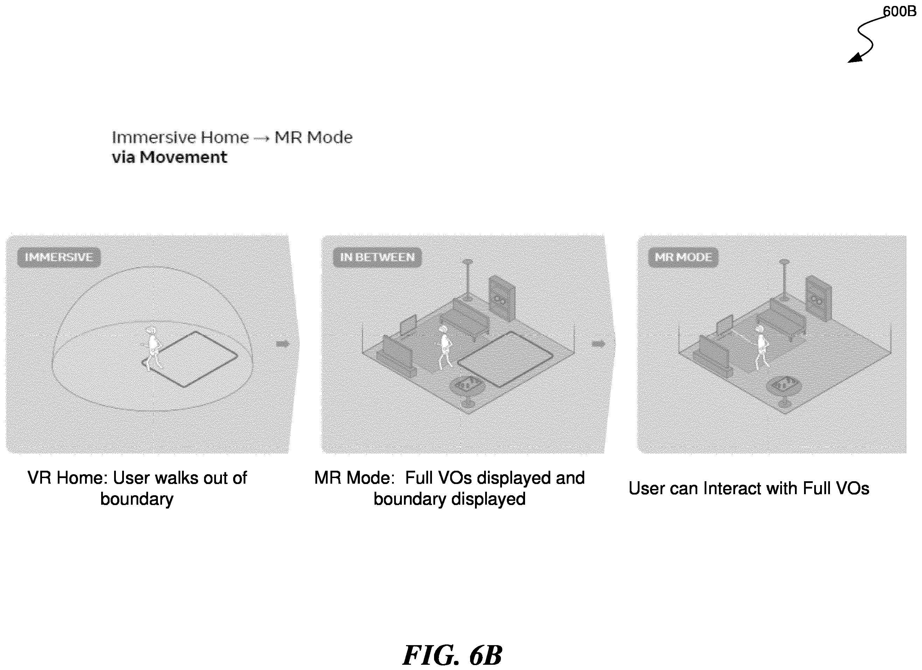

Diagram 600B of Figure 6B illustrates a workflow for transitioning from VR mode to MR mode via user movement. In the illustrated example, the user is initially immersed in a VR environment via a VR home application (e.g., native VR application for the XR system). The user can be initially located in the boundary of a usage space and move out of the boundary. Responsive to the user movement, the XR system can transition from the VR home application (or any other suitable VR application) to MR mode, where one or more full virtual objects can be displayed to the user in a MR environment such that the user can interact with the full virtual objects. In some implementations, when the user interacts with a full virtual object, display of the boundary of the usage space the user moved out of can be removed from the MR environment.

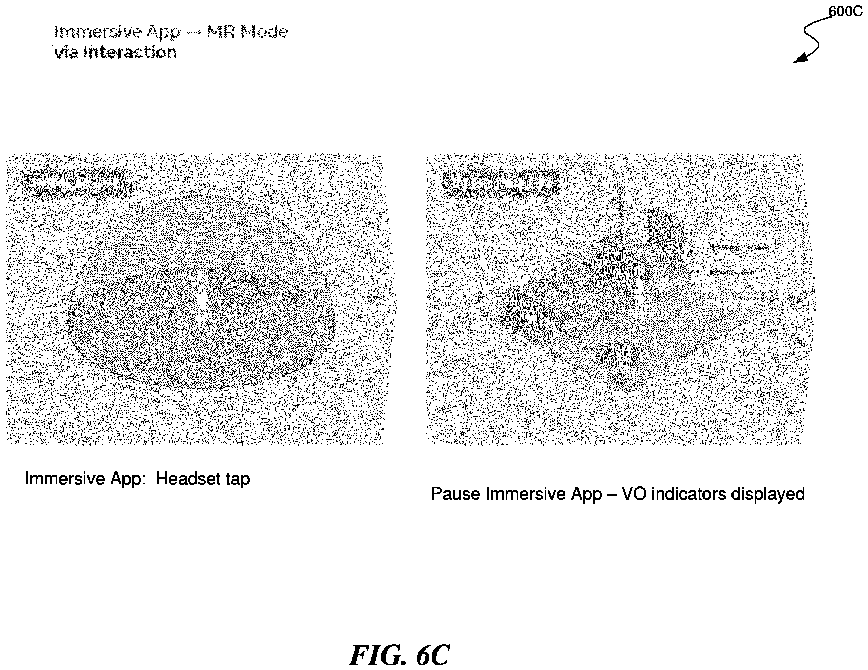

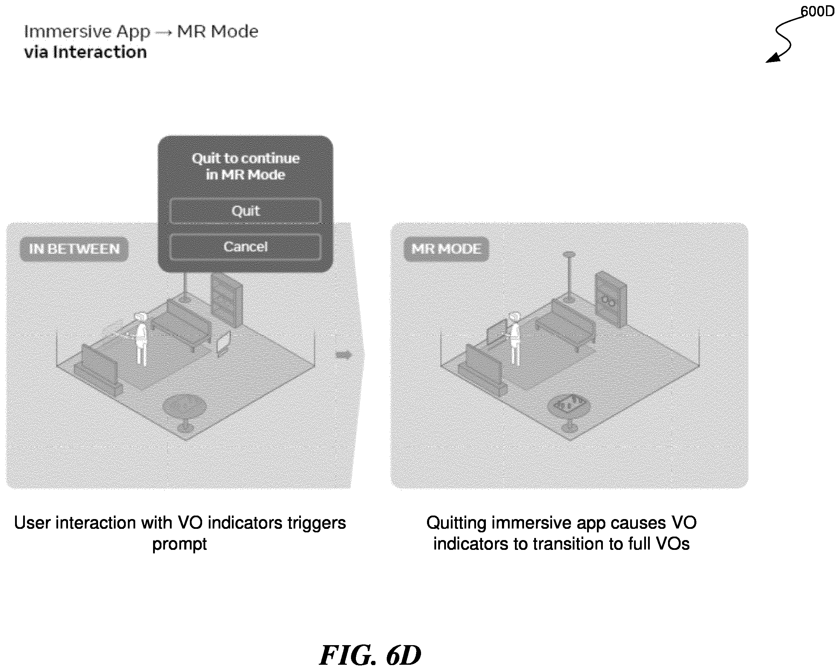

Diagrams 600C and 600D of Figures 6C and 6D illustrate a workflow for transitioning from VR mode to MR mode via user action while the user is immersed via a VR application. In the illustrated example, the user is initially immersed in a VR environment via a VR application (e.g., third-party VR application, such as a VR game or social experience). The user can take an action that triggers transition from VR mode to MR mode, such as a performing a given number of taps on the HMD of the XR system or performing any other suitable action. Responsive to the user action, the XR system can pause the VR application and trigger a pass-through display that comprises the user's real-world surroundings. During the paused VR application and the pass-through display, one or more virtual object indicators can be displayed. Virtual object indicators can be virtual objects with limited user interaction capabilities and/or that comprise a lower resolution display. A user can interact with one of the displayed virtual object indicators, but because the display is not a full virtual object the interaction can trigger a modal that asks the user to select the operating mode. For example, the user can switch to MR mode and quit the VR application or continue the VR application and leave MR mode. When the user selects to quit the VR application, the virtual object indicators can be transitioned to full virtual objects in an MR environment.

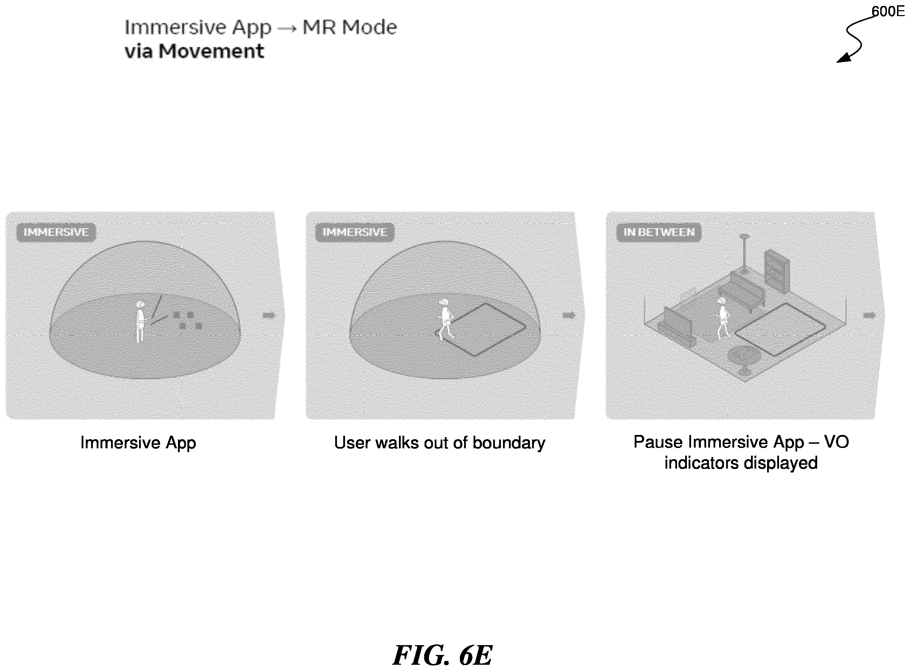

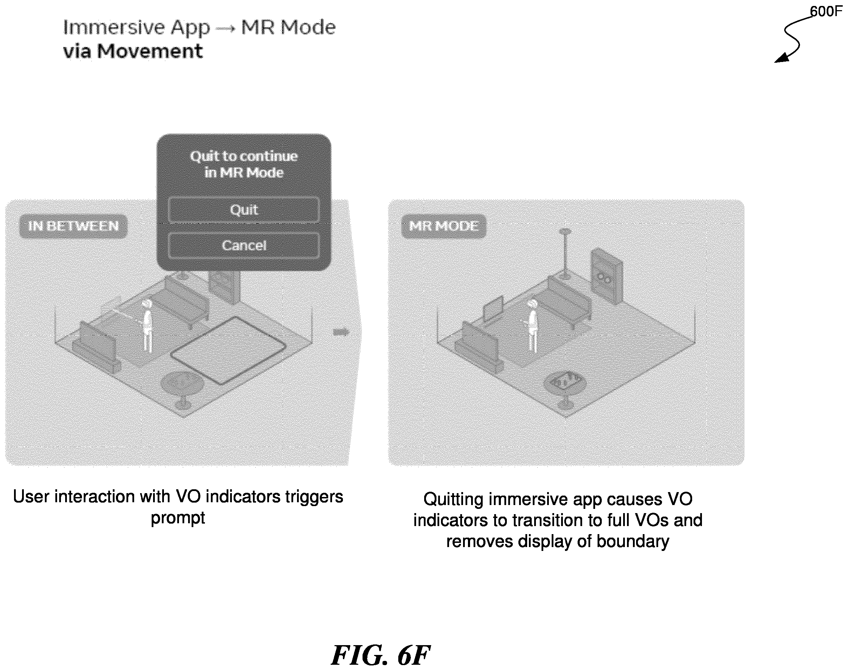

Diagrams 600E and 600F of Figures 6E and 6F illustrate a workflow for transitioning from VR mode to MR mode via user movement while the user is immersed via a VR application. In the illustrated example, the user is initially immersed in a VR environment via a VR application (e.g., third-party VR application, such as a VR game or social experience). The user can be initially located in the boundary of a usage space and move out of the boundary. Responsive to the user movement, the XR system can pause the VR application and trigger a pass-through display that comprises the user's real-world surroundings. During the paused VR application and the pass-through display, one or more virtual object indicators can be displayed. A user can interact with one of the displayed virtual object indicators, but because the display is not a full virtual object the interaction can trigger a modal that asks the user to select the operating mode. For example, the user can switch to MR mode and quit the VR application or continue the VR application and leave MR mode. When the user selects to quit the VR application, the virtual object indicators can be transitioned to full virtual objects in an MR environment.

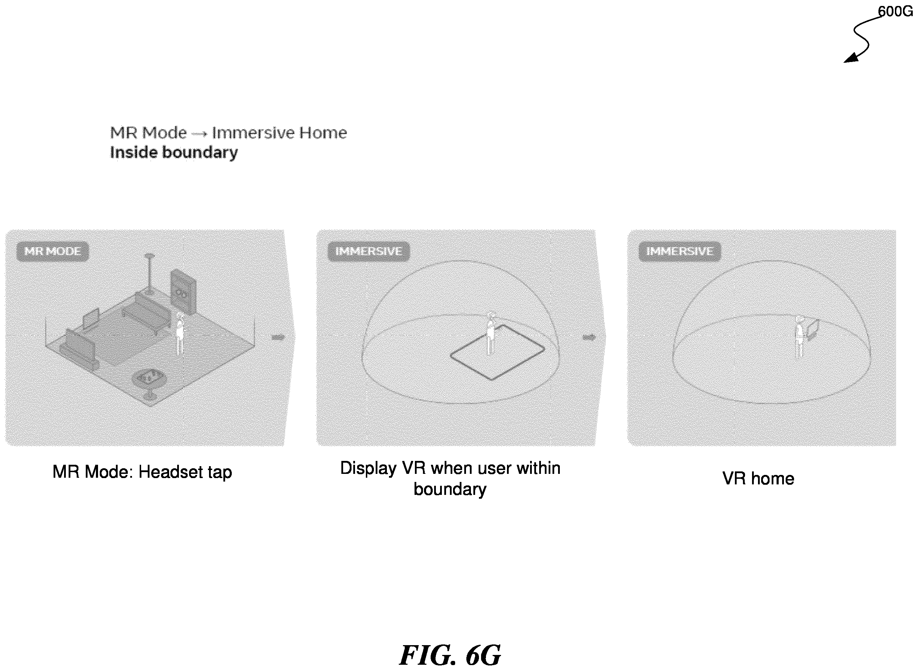

Diagram 600G of Figures 6G illustrates a workflow for transitioning from MR mode to VR mode via user action. In the illustrated example, the user is initially displayed an MR environment that includes the user's real-world environment and virtual objects (e.g., full virtual objects). The user can take an action that triggers transition from MR mode to VR mode, such as tapping the HMD of the XR system or via performing any other suitable action. Responsive to the user action, the XR system can transition from the MR environment to VR mode. In some implementations, the XR system can scan the user's real-world surroundings to detect whether the user is located within the boundary of a predefined usage space. When the XR system detects that the user is in such a usage space, the user can be immersed in a VR environment. In some implementations, the VR environment can be the VR home application (e.g., native VR application for the XR system) or any other suitable VR application.

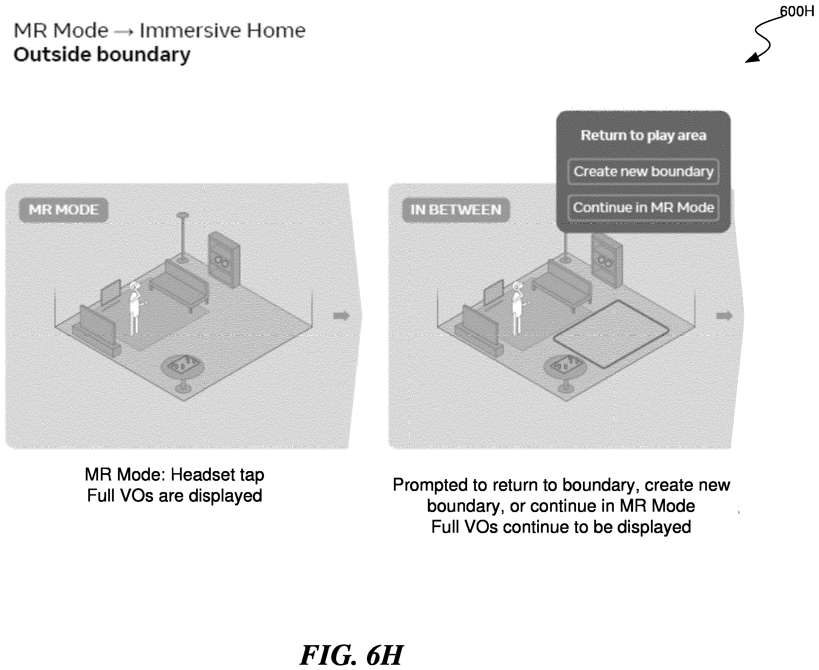

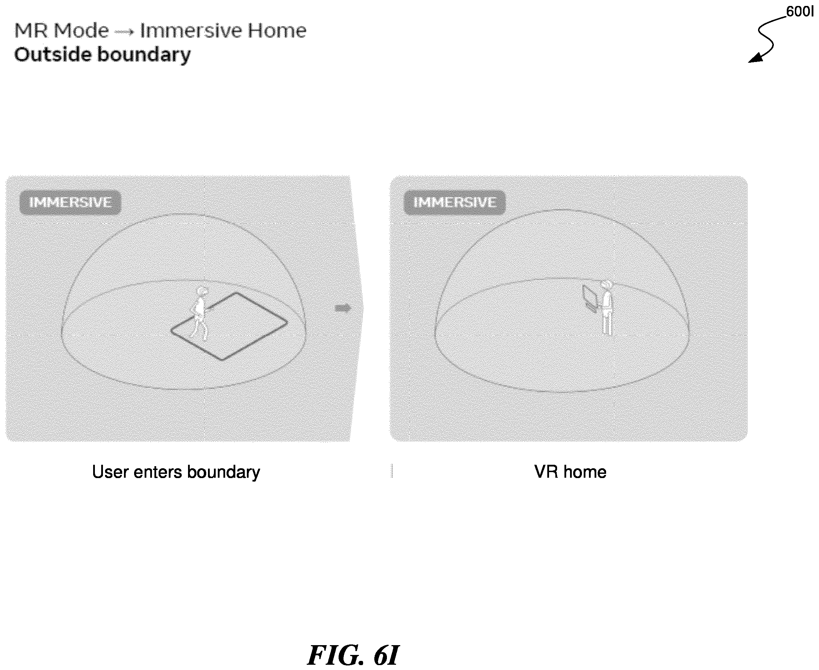

Diagrams 600H and 600I of Figures 6H and 6I illustrate a workflow for transitioning from MR mode to VR mode via user movement. In the illustrated example, the user is initially displayed an MR environment that includes the user's real-world environment and virtual objects (e.g., full virtual objects). The user can take an action that triggers transition from MR mode to VR mode, such as tapping the HMD of the XR system or via performing any other suitable action. Responsive to the user action, the XR system can transition from the MR environment to VR mode. In some implementations, the XR system can scan the user's real-world surroundings to detect whether the user is located within the boundary of a predefined usage space. When the XR system detects that the user is not in such a usage space, the user can be prompted to return to a predefined usage space, create a new usage space, or continue in MR mode (rather than transition to VR mode). Responsive to detection that the user has entered such a usage space, the user can be immersed in a VR environment. In some implementations, the VR environment can be the VR home application (e.g., native VR application for the XR system) or any other suitable VR application.

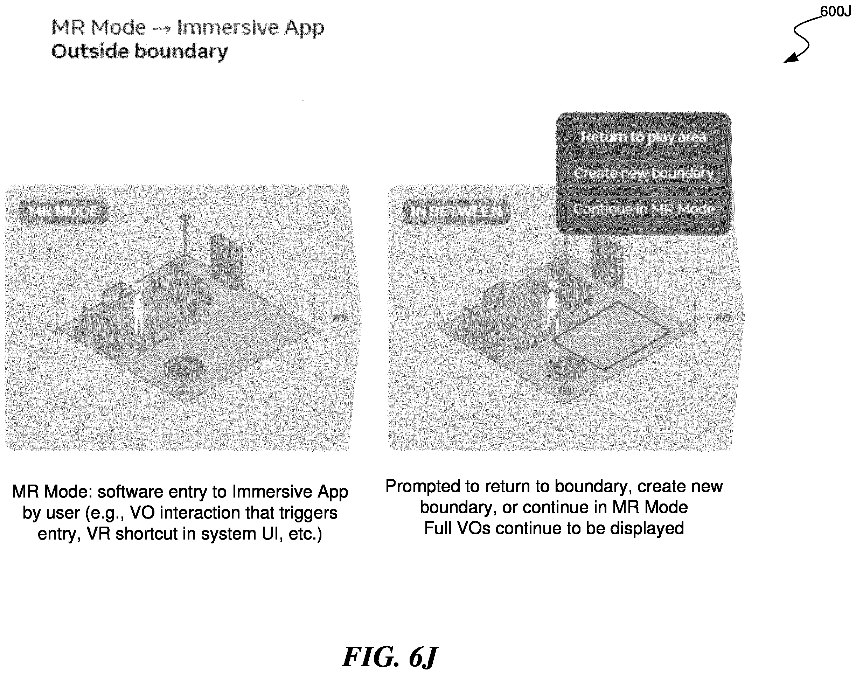

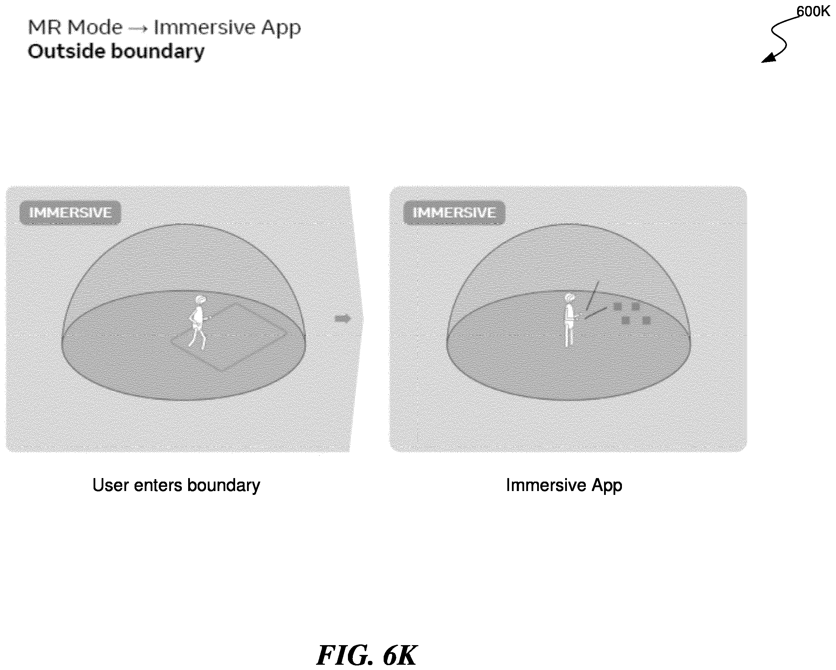

Diagrams 600J and 600K of Figures 6J and 6K illustrate a workflow for transitioning from MR mode to an immersive VR application in VR mode via user movement. In the illustrated example, the user is initially displayed an MR environment that includes the user's real-world environment and virtual objects (e.g., full virtual objects). A software trigger can cause a transition from MR mode to VR mode, such as a virtual object interaction that triggers execution of a VR application, a VR shortcut selection by the user for the VR application, and the like. Responsive to the software trigger, the XR system can transition from the MR environment to VR mode. In some implementations, the XR system can scan the user's real-world surroundings to detect whether the user is located within the boundary of a predefined usage space. When the XR system detects that the user is not in such a usage space, the user can be prompted to return to a predefined usage space, create a new usage space, or continue in MR mode (rather than transition to VR mode). Responsive to detection that the user has entered such a usage space, the user can be immersed in a VR environment. In some implementations, a VR application (e.g., third-party VR application, such as a VR game or social experience) can immerse the user in the VR environment.

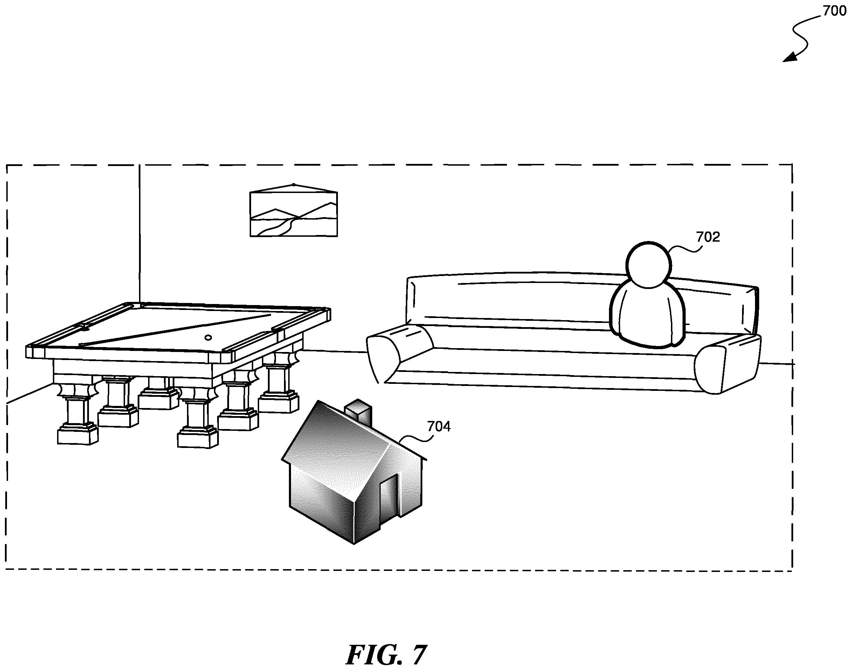

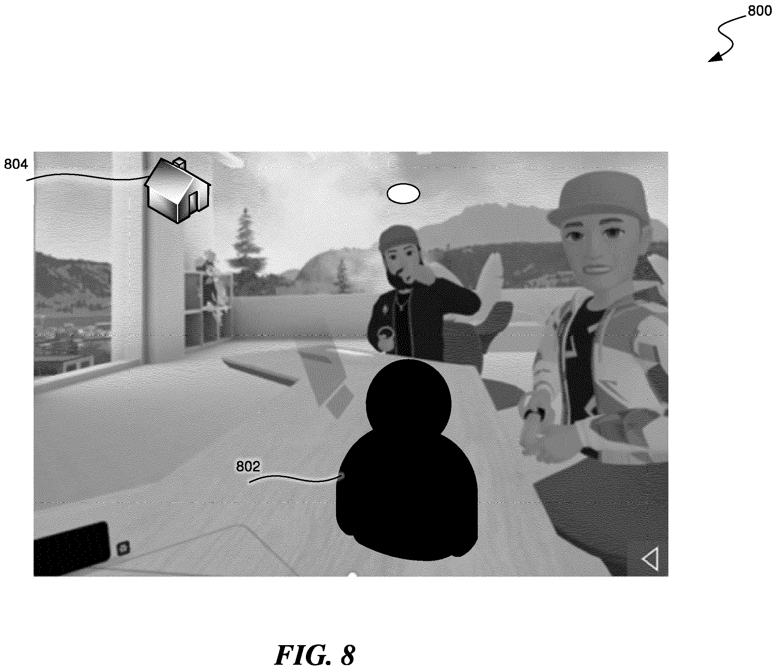

In some implementations, virtual objects that persist when transitioning XR operating modes (e.g., from MR to VR, from VR to MR, etc.) can be altered. Figure 7 is a conceptual diagram illustrating an example mixed reality environment with virtual objects and Figure 8 is a conceptual diagram illustrating an example virtual reality environment with virtual objects. Diagram 700 illustrates a MR environment comprising a real-world environment and virtual objects 702 and 704. Diagram 800 illustrates a virtual reality environment comprising a computer generated environment and virtual objects 802 and 804.

Implementations can transition from the MR environment of diagram 700 into the VR environment of diagram 800 such that virtual objects 702 and 704 are persisted as virtual objects 802 and 804. In the illustrated example, the scale and the distance at which virtual object 704 appears to be displayed from the perspective of the user is altered when transitioning from MR to VR. Virtual object 804 is smaller in size and appears to be displayed further from the user in the VR environment. In addition, in the illustrated example, the skin of virtual object 702 is altered when transitioning from MR to VR, as depicted by virtual object 802 in the VR environment. A VR environment can have virtually limitless size, where some real-world environments that correspond to an MR environment may be constrained, such as a room in a building. Accordingly, virtual objects may be moved further from a user in a VR environment, but such a distance may be impractical in the MR environment. In addition, a VR application may control the visual display of the VR environment, and thus the VR application may reskin (e.g., alter the visual appearance) a virtual object to maintain a visual aesthetic.

Implementations can also transition from the VR environment of diagram 800 into the MR environment of diagram 700 such that virtual objects 802 and 804 are persisted as virtual objects 702 and 704. In the illustrated example, the scale and the distance at which virtual object 804 appears to be displayed from the perspective of the user is altered when transitioning from VR to MR. Virtual object 704 is larger in size and appears to be displayed closer to the user in the MR environment. Further, in the illustrated example, the skin of virtual object 802 is altered when transitioning from VR to MR, as depicted by virtual object 702 in the MR environment. A VR environment can have virtually limitless size, where some real-world environments that correspond to an MR environment may be constrained, such as a room in a building. Accordingly, virtual objects may be moved closer to the user in an MR environment due to size constraints on the environment. In addition, a VR application may control the visual display of the VR environment, and thus the VR application may reskin a virtual object to maintain a visual aesthetic. When transitioning to MR, the virtual object may be altered to revert to its original skin or transition to a skin other than the skin applied by the VR application.

Those skilled in the art will appreciate that the components illustrated in Figures 1-8 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

In some implementations, a virtual tablet can comprise a display object for one or more applications executing at the XR system. The virtual tablet can provide a user with a practical and user friendly tool for interacting with applications while immersed in an XR environment, such as an MR environment. In some implementations, the virtual tablet represents a virtual computer within the XR environment at which the user can interact with application(s).

In some implementations, the state of the virtual tablet can be stored at a point in time, and the virtual tablet can be restored to this previously stored state. For example, when an XR system enters a sleep state or an off state (or when transitioning from an MR environment), the state of the virtual tablet can be stored. In some implementations, the virtual tablet can be restored using this stored state such that: the virtual tablet is located at a same location in the XR environment; and the content/application(s) displayed by the virtual tablet are restored, including the state of application(s). The virtual tablet can be considered a display object and/or overlay with respect to an XR environment. Further details regarding providing an overlay, relative to an XR environment, via a shell process connected to a runtime service, storing the state of the overlay, and restoring the state of the overlay are described in U.S. Application No. 18/068,071, filed December 19, 2022, titled "Overlay on an Artificial Reality Environment," which is herein incorporated by reference in its entirety.

Figure 9 is a flow diagram illustrating a process 900 used in some implementations of the present technology for booting an artificial reality system in a mixed reality or virtual reality operating mode. Process 900 can be triggered in response to booting an XR system.

At block 902, process 900 can boot an XR system. For example, the system can be booted via a power button, a button press on a hand-held controller, and the like. The XR system can be booted from an off state or a sleep state to an active state. At block 904, process 900 can detect a last operating mode for the XR system. For example, a flag or state can be stored that indicates the last operating mode (e.g., MR or VR) of the XR system when entering the off state or sleep state. When the last operating mode is MR, process 900 can progress to block 906. When the last operating mode is VR, process 900 can progress to block 914.

At block 906, process 900 can initiate booting the XR system in MR mode. At block 908, process 900 can display a real-world environment via a display of the XR system to the user. For example, MR mode can display an MR environment that includes a real-world environment and computer generated virtual objects. At block 910, process 900 can repopulate virtual objects based on a stored state of the virtual objects. For example, when the XR system enters an off state or sleep state in MR mode, the XR system can store the state of virtual objects displayed in the MR environment. In some implementations, the virtual objects can be repopulated and restored to these stored states, such as displayed at a same location, displayed with a same pose or display state, displayed with a same content, and the like.

At block 912, process 900 can restore a virtual tablet based on a stored state for the virtual tablet. For example, a virtual tablet can comprise a display object for one or more applications executing at the XR system. The virtual tablet can provide a user with a practical and user friendly tool for interacting with applications in an MR environment.

When the XR system enters a sleep state or an off state, the state of the virtual tablet can be stored. In some implementations, the virtual tablet can be restored using this stored state such that: the virtual tablet is located at a same location in the MR environment; and the content/application(s) displayed by the virtual tablet are restored, including the state of application(s).

At block 914, process 900 can initiate booting in VR mode. At block 916, process 900 can scan the user's environment, such as the real-world environment surrounding the user/XR system. At block 918, process 900 can determine whether the user is within the boundary of a predefined usage space. When the user is within the boundary of a predefined usage space, process 900 can progress to block 922. When the user is not within the boundary of a predefined usage space, process 900 can progress to block 920.

At block 920, process 900 can prompt the user to enter the boundary of a predefined usage space or establish a new usage space. For example, once the user is located within the boundary of a usage space, process 900 can immerse the user in a VR environment. At block 922, process 900 can immerse the user in a VR environment.

Figure 10 is a flow diagram illustrating a process used in some implementations of the present technology for persisting virtual objects while transitioning between virtual reality and mixed reality modes. Process 1000 can be triggered in response to operating an XR system in a VR mode or a MR mode.

At block 1002, process 1000 can operate the XR system in a first XR mode. For example, the first XR mode can be either a VR mode or an MR mode.

At block 1004, process 1000 can display virtual objects in a first XR environment. For example, when the first XR mode is a VR mode, the first XR environment can be a VR environment with virtual objects. In another example, when the first XR mode is a MR mode, the first XR environment can be a MR environment with virtual objects.

At block 1006, process 600 can detect a transition condition for transitioning from the first XR mode to a second XR mode. Example transition conditions can include a user action (e.g., tapping an HMD), user movement that triggers transition (e.g., the user moving out of the boundary of a usage space), a software trigger (e.g., the user interacting with a virtual object that triggers the transition, the user selecting an XR mode from the native XR system software, etc.), or any other suitable transition condition. When the transition condition is detected, process 1000 can progress to block 1008. When the transition condition is not detected, process 1000 can loop back to block 1004, where the virtual objects can continue to be displayed in the first XR environment until a transition condition is detected.

At block 1008, process 1000 can transition to the second XR mode. For example, the XR system can transition from VR mode to MR mode or MR mode to VR mode. At block 1010, process 100 can alter the virtual objects that are persisted between the first XR environment and the second XR environment. For example, one or more displayed virtual objects present in the first XR mode can be persisted in the second XR mode. In some implementations, altering the display of the one or more virtual objects comprises one or more of: altering a scale of the one or more virtual objects form the user's perspective; altering a skin (e.g., visual appearance wrapped over the structure) of the one or more virtual objects; altering a distance at which the one or more virtual objects appear to be displayed from the user's perspective, or any combination thereof.

For example, when the XR system transitions from VR mode to MR mode, the altering can include: determining that a distance of the one or more virtual objects from the user's perspective in a VR environment displayed during the VR mode is greater than a threshold; and altering, in response to the determining, the distance at which the one or more virtual objects appear to be displayed from the user's perspective in a MR environment displayed during the MR mode. In addition, in response to the determining, the scale at which the one more virtual objects appear to be displayed from the user's perspective in the MR environment can be altered. For example, the one or more virtual objects can appear to be displayed at a first scale from the user's perspective in the VR environment, the one or more virtual objects can appear to be displayed at a second scale from the user's perspective in the MR environment, and the adjusting can enlarge the one or more virtual objects in the MR environment from the user's perspective.

In some implementations, the threshold distance that triggers altering the distance and/or scale of a virtual object can be based on a size of the MR environment. For example, the MR environment can comprise virtual content (e.g., virtual objects) and real-world components, such as the real-world surroundings of an XR system. The XR system can determine, based on processing images of the real-world surroundings via computer vision model(s), a size of the real-world surroundings (e.g., a depth of a room in which the XR system is located). The threshold distance can be based on a size metric (e.g., depth) of the real-world surroundings. In this example, the virtual object may be displayed at a distance in the VR environment that is incompatible with the real-world surroundings of the MR environment. Determining, based on the size metric of the real-world surroundings, the threshold distance can support altering the display of the virtual object such that that altered display is compatible with the real-world surroundings that comprise part of the MR environment. In some implementations, the threshold distance can be set at the size metric, can comprise a percentage of the size metric, or can be determined relative to the size metric in any other suitable manner.

In another example, when the XR system transitions from MR mode to VR mode, the altering can include altering the skin of the one or more virtual objects. For example, the one or more virtual objects can comprise a three-dimensional structure, and altering the skin of the one or more virtual objects can include altering one or more textures applied to the three-dimensional structure when displaying the one or more virtual objects. In some implementations, the one or more virtual objects are displayed with a first skin in the MR environment displayed during the MR mode, and the one or more virtual objects are displayed with a second skin in the VR environment displayed during the VR mode.

In some implementations, display of the skin of the one or more virtual objects is controlled by first software during the MR mode, display of the skin of the one or more virtual objects is controlled by second software during the VR mode, the first software applies the first skin in the MR environment, and the second software applies the second skin in the VR environment. For example, the first software can be a system shell and the second software can be a third-party VR application.

In some implementations, altering the virtual objects that are persisted between the first XR environment and the second XR environment can include having the virtual objects appear the same to the user but modifying how they are displayed to be presentable in the new environment type. For example, a virtual object presented in an VR mode, when moved into an MR mode, can be reconfigured to be consistently displayed with a position relative to real-world objects, where that position may be corelated to where the user perceived the virtual object in the VR environment. As another example a virtual object presented in an MR mode, when moved into an VR mode, can be reconfigured to appear to the user as holding a consistent position between the environments, i.e., the virtual object's position is corelated to where the user perceived the virtual object in the MR environment. This can include changing how the virtual object is anchored in the new mode, while appearing to the user as the virtual object is simply moving between modes.

Further, the altering of the virtual objects that are persisted between the first XR environment and the second XR environment can include modifying the virtual object to be consistent with a theme or rules of the new XR environment. For example, a light saber presented in an MR environment may be reconfigured to appear as a broad sword when moved into a VR environment with a medieval theme. Also, the display, context, or functionality of the transitioned virtual object can be modified by rules of an application controlling the new XR environment. Continuing the previous example, the light saber in the MR mode may have had a capability to cut through any other virtual object, but the application in control of the medieval VR environment may have a rule specifying an upper limit on objects abilities to cut through other objects, and the broad sword version of the virtual object cutting functionality can be set to meet only this upper limit. In this example, a first XR application can cause display of the virtual object in the MR environment, a second XR application can cause display of the virtual object in the VR environment, the virtual object's interactions with external elements (e.g., other virtual objects, users, user avatars, etc.) can be controlled by the first XR application in the context of the MR environment, and the virtual object's interactions with external elements can be controlled by the second XR application in the context of the VR environment.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

## Claims

1. A method for transitioning between virtual reality and mixed reality modes, the method comprising:
detecting, at an XR system, a trigger condition for transitioning from a first artificial reality mode to a second artificial reality mode;
altering one or more user displays to transition from the first artificial reality mode to the
second artificial reality mode, wherein,
one or more displayed virtual objects present in the first artificial reality mode are persisted in the second artificial reality mode;
display of the one or more virtual objects is altered between the first artificial reality mode and the second artificial reality mode; and
altering the display of the one or more virtual objects comprises one or more of: altering a scale of the one or more virtual objects form the user's perspective, altering a skin of the one or more virtual objects, altering a distance at which the one or more virtual objects appear to be displayed from the user's perspective, or any combination thereof.

2. The method of claim 1, wherein the first artificial reality mode comprises virtual reality mode and the second artificial reality mode comprises mixed reality mode.

3. The method of claim 2, wherein altering the display of the one or more virtual objects further comprises:
determining that a distance of the one or more virtual objects from the user's perspective in a virtual reality environment displayed during the virtual reality mode is greater than a threshold; and
altering, in response to the determining, the distance at which the one or more virtual objects appear to be displayed from the user's perspective in a mixed reality environment displayed during the mixed reality mode.

4. The method of any preceding claim, further comprising:
altering, in response to the determining, the scale at which the one more virtual objects appear to be displayed from the user's perspective in the mixed reality environment, wherein the one or more virtual objects appear to be displayed at a first scale from the user's perspective in the virtual reality environment, the one or more virtual objects appear to be displayed at a second scale from the user's perspective in the mixed reality environment, and the adjusting enlarges the one or more virtual objects in the mixed reality environment from the user's perspective.

5. The method of claim 1, wherein the first artificial reality mode comprises mixed reality mode and the second artificial reality mode comprises virtual reality mode.

6. The method of claim 5, wherein altering the display of the one or more virtual objects further comprises:
altering the skin of the one or more virtual objects, wherein the one or more virtual objects comprise a three-dimensional structure, and altering the skin of the one or more virtual objects comprises altering one or more textures applied to the three-dimensional structure when displaying the one or more virtual objects.

7. The method of claim 6, wherein the one or more virtual objects are displayed with a first skin in a mixed reality environment displayed during the mixed reality mode, and the one or more virtual objects are displayed with a second skin in a virtual reality environment displayed during the virtual reality mode.

8. The method of claim 6 or 7, wherein display of the skin of the one or more virtual objects is controlled by first software during the mixed reality mode, display of the skin of the one or more virtual objects is controlled by second software during the virtual reality mode, the first software applies the first skin in the mixed reality environment, and the second software applies the second skin in the virtual reality environment.

9. The method of claim 8, wherein the first software comprises a system shell and the second software comprises a third-party virtual reality application.

10. An artificial reality (XR) system for transitioning between virtual reality and mixed reality modes, the XR system comprising:
one or more processors; and
one or more memories storing instructions that, when executed by the one or more processors, cause the XR system to carry out the method of any preceding claim.

11. A computer-readable storage medium storing instructions for transitioning between virtual reality and mixed reality modes, the instructions, when executed by a computing system, cause the computing system to carry out the method of any of claims 1 to 9.

12. A computer program product comprising instructions which, when the program is executed by a computer, causes the computer to carry out the method of any of claims 1 to 9.
